# FASCICULE DE BREVET EUROPEEN

(11) **EP 0 592 657 B1**
(45) Date de publication et mention de la délivrance du brevet: **15.10.1997**
(21) Numéro de dépôt: 93911826.1
(22) Date de dépôt: 27.04.1993
(51) Int. Cl.: G01F 1/32

(54) **OSCILLATEUR FLUIDIQUE ET DEBITMETRE COMPORTANT UN TEL OSCILLATEUR**
Durchflussmesser mit einem fluidischen Oscillator
FLUIDIC OSCILLATOR AND FLOW METER COMPRISING SAME

(30) Priorité: 29.04.1992 FR 9205301
(43) Date de publication de la demande: 20.04.1994
(73) Titulaire: SCHLUMBERGER INDUSTRIES S.A., 92120 Montrouge (FR)
(72) Inventeur: HUANG, Bao, Tuan, F-92160 Antony (FR); HOCQUET, Philippe, F-92130 Issy-les-Moulineaux (FR)
(86) Numéro de dépôt international: FR9300407
(87) Numéro de publication internationale: WO9322626

(56) Documents cités:
- EP-A- 0 295 623
- FR-A- 2 663 416
- US-A- 3 589 185
- US-A- 4 184 636
- US-A- 4 244 230
- US-A- 4 610 162
- US-A- 4 843 889
- JOURNAL OF PHYSICS E. SCIENTIFIC INSTRUMENTS vol. 21, no. 10, Octobre 1988, BRISTOL GB pages 977 - 989 R.F. BOUCHER, ET AL: 'LOW REYNOLDS NUMBER FLUIDIC FLOWMETERING'

## Description

La présente invention concerne un oscillateur fluidique et un débitmètre pour un fluide liquide ou gazeux, en écoulement.

La plupart des débitmètres ou compteurs existant actuellement comportent des éléments mécaniques en mouvement. C'est le cas notamment des débitmètres à turbine ou à membrane.
Par comparaison, les oscillateurs fluidiques n'ont aucune pièce en mouvement qui pourrait s'user avec le temps et en conséquence ces oscillateurs ne nécessitent pas d'être recalibrés.
Ces oscillateurs peuvent être de petite dimension et d'architecture très simple. Leur fiabilité est donc très bonne. De plus, ils délivrent un signal en fréquence, lequel peut être aisément converti en signal numérique. Cette caractéristique est particulièrement avantageuse pour la lecture des compteurs à distance.

La plupart des efforts pour développer ces débitmètres se sont portés sur les débitmètres à tourbillons couramment appelés débitmètres à effet Vortex et les débitmètres à effet Coanda.
Le principe de fonctionnement des débitmètres à effet Vortex est basé sur le fait bien connu que la présence d'un obstacle dans une conduite dans laquelle s'écoule un fluide donne lieu à un échappement périodique de tourbillons. Le principe de la mesure consiste à détecter la fréquence de détachement des tourbillons qui, pour un obstacle de géométrie donnée, est proportionnel à la vitesse d'écoulement.

La fréquence des tourbillons est mesurée de différentes façons, ce qui permet d'accéder à la vitesse moyenne de l'écoulement, donc au débit. Les débitmètres à effet Vortex sont généralement très sensibles au bruit et aux conditions du fluide en amont. En pratique, on utilise un redresseur d'écoulement pour rendre uniforme le profil de vitesse. Un débitmètre de ce type est par exemple décrit dans le brevet US 3,589,185.
L'effet Coanda, utilisé dans les débitmètres du même nom, consiste en la tendance naturelle d'un jet fluide de suivre les contours d'une paroi quand le jet se décharge près de cette paroi, même si le contour de cette paroi s'éloigne de l'axe de décharge du jet. Un oscillateur fluidique de ce type comporte une chambre dans laquelle se décharge le jet de fluide à travers une tuyère convergente. Deux parois latérales sont placées dans la chambre symétriquement par rapport à l'axe de décharge du jet. Le jet issu de l'entrée de l'oscillateur s'attache spontanément à l'une des parois latérales par effet Coanda. Une partie du débit est alors dérivée par un canal latéral de la paroi sur laquelle s'attache le jet, ce qui a pour effet de décoller le jet de cette dernière et de l'attacher à la paroi opposée. Le phénomène se reproduit alors et entraine une oscillation permanente de l'écoulement entrant. Malheureusement, avec ce type d'appareil, la plage de mesure de débit est relativement limitée et la non linéarité de la courbe de calibration est assez importante. De plus, ce type d'appareil peut s'arrêter d'osciller dans certaines conditions liées à des perturbations extérieures, et il en résulte une perte du signal. Les documents EP-A-0295623 et FR-A-2663416 décrivent un tel oscillateur fluidique qui comprend dans une chambre d'oscillation, une ouverture pour l'entrée du jet dans ladite chambre, un obstacle possédant dans sa partie frontale une cavité centrale en regard de l'ouverture, ainsi que deux cavités secondaires situées de part et d'autre de la cavité centrale.
Un obstacle supplémentaire auquel s'attache alternativement le jet de fluide est placé entre chaque cavité secondaire et la paroi de la chambre d'oscillation dans laquelle est raccordée l'ouverture d'entrée.
Le jet de fluide attaché à l'un des obstacles supplémentaires donne lieu à un écoulement de recirculation qui est canalisé par la cavité secondaire correspondante et par ledit obstacle.
Une partie de l'écoulement s'échappe sur l'un des côtés de l'obstacle muni des cavités tandis que la partie restante est renvoyée sur le jet de fluide après avoir contourné l'obstacle supplémentaire.
De façon à augmenter la plage de mesure possible, Okadayashi et al. ont proposé, dans le brevet U.S. 4,610,162, de combiner deux oscillateurs fluidiques, l'un fonctionnant en bas débits et l'autre en forts débits.
A cause des inconvénients rencontrés avec les débitmètres à effet Vortex et à effet Coanda, des tentatives ont été faites pour développer d'autres types d'oscillateurs fluidiques qui opèrent selon des principes fondamentalement différents. On en trouve une application dans les débitmètres décrits dans les brevets U.S. 4,184,636, 4,244,230 et 4,843,889.
Par exemple, le brevet U.S. 4,244,230 décrit un débitmètre à oscillateur fluidique placé dans une canalisation sur le parcours du fluide dont il prélève une partie. L'oscillateur a deux organes disposés côte à côte et dont les parois en vis à vis forment une buse. Un obstacle possède une cavité frontale placée en regard de la buse.
La cavité présente une entrée et une sortie commune. Le jet sortant de la buse pénètre dans la cavité et vient frapper le fond de la cavité.

L' oscillation transversale du jet dans la cavité s'accompagne de la formation de deux tourbillons, de part et d'autre du jet. Chaque tourbillon est alternativement fort et faible, en opposition de phase. Le jet ressort par la sortie commune et est dirigé dans le flux principal.

Des capteurs de pression permettent de mesurer la fréquence des oscillations du jet dans la cavité qui est proportionnelle au débit. Les performances de ce type de débitmètre sont généralement meilleures que celles obtenues avec les débitmètres fluidiques classiques. Malheureusement, ces performances ne sont pas encore satisfaisantes en particulier au niveau de la sensibilité et de la plage de mesure, mais aussi en ce qui concerne la linéarité du dispositif sur cette plage.
La présente invention a pour but de remédier à ces inconvénients. L'invention propose un oscillateur fluidique et un débitmètre comportant un tel oscillateur qui a des performances améliorées par rapport aux débitmètres de l'art antérieur.

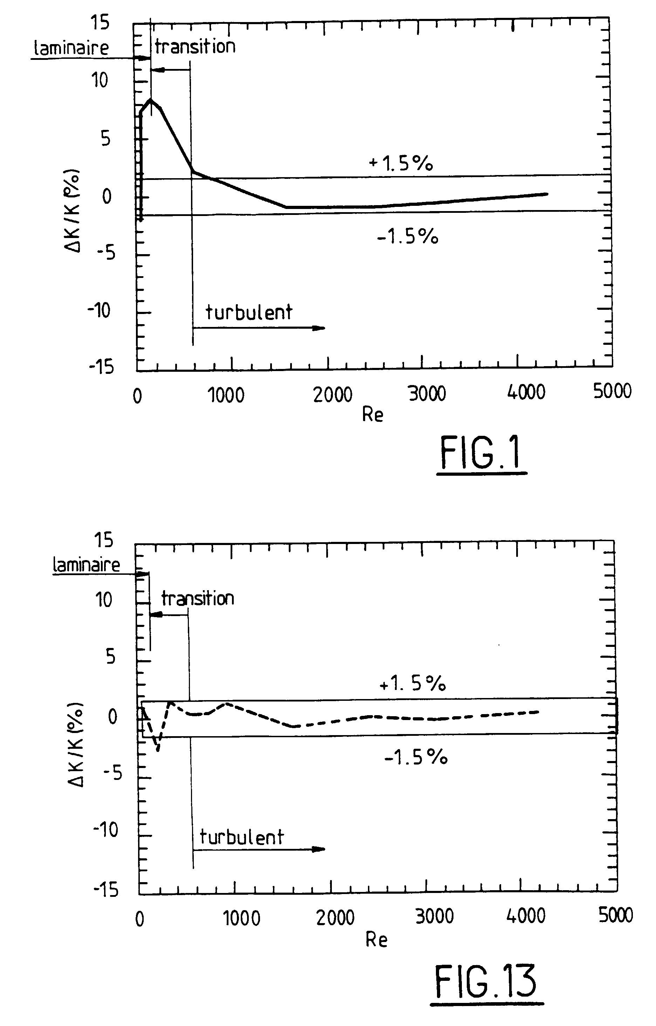

De manière usuelle, la linéarité d'un tel oscillateur fluidique est appréciée par rapport aux variations relatives du facteur K égal au rapport de la fréquence f d'oscillation du jet par le débit Q.
Généralement, on distingue trois régimes de débit en allant vers les débits croissants : le régime laminaire, le régime de transition, et le régime turbulent.
On constate sur la figure 1 représentant la variation relative de K soit ΔK/K en fonction du nombre de Reynolds RE (on rappelle que le nombre de Reynolds RE, bien connu de l'homme du Métier, est égale à la vitesse du fluide au niveau de l'ouverture d'entrée de la chambre d'oscillation multipliée par la largeur de cette ouveerture et divisée par la viscosité cinétique du fluide) que les problèmes de linéarité se posent essentiellement pour les régimes laminaire et de transition. On peut voir qu'en régime laminaire, et à bas débit, la variation relative du facteur K chute abruptement. Dans la zone de transition, en bordure de la zone de régime laminaire, la courbe présente une bosse.
L'invention concerne un oscillateur fluidique linéaire sur une plage étendue. On considère qu'un tel oscillateur est linéaire lorsque les variations relatives du facteur K sont inférieures à ± 1,5%. Comme on va le voir dans la suite, l'invention permet de réduire l'amplitude de la bosse de la variation relative du facteur K en régime de transition et par conséquent d'augmenter la plage de fonctionnement linéaire d'autant.

L'oscillateur fluidique conforme à l'invention est symétrique par rapport à un plan de symétrie longitudinal. Il comprend :
- une entrée de fluide comprenant une ouverture d'entrée possédant une largeur d et apte à former un jet de fluide bidimensionnel oscillant transversalement par rapport au plan de symétrie longitudinal et des tourbillons de part et d'autre du jet, ces tourbillons étant alternativement forts et faibles en opposition de phase et en relation avec l'oscillation du jet,
- une chambre d'oscillation raccordée à l'ouverture d'entrée de fluide,
- un obstacle disposé dans la chambre d'oscillation et possédant une partie frontale dans laquelle une cavité principale est pratiquée en regard de l'ouverture d'entrée de fluide, la partie frontale de l'obstacle et la paroi de la chambre d'osillation raccordée à l'ouverture d'entrée définissant entre elles deux espaces libres de tout obstacle, signés de part et d'autre de la cavité principale, l'oscillateur fluidique étant caractérisé en ce qu'il comprend en outre des moyens aptes à rendre l'extension radiale de ces tourbillons dépendante du régime d'écoulement du jet, lesdits moyens comprenant au moins deux cavités secondaires pratiquées dans la partie frontale de l'obstacle, ces cavités secondaires étant disposées symétriquement par rapport au plan de symétrie de part et d'autre de la cavité principale.

Dans cette réalisation, à fort débit, un tourbillon secondaire se forme dans chaque cavité secondaire. Les tourbillons principaux sont localisés entre la partie frontale de l'obstacle et la paroi de la chambre d'oscillation. Leur extension radiale est limitée par l'extension radiale des tourbillons secondaires.
On obtient, par conséquent, une augmentation du facteur K.
Par contre, en régime de transition et en diminuant le débit, l'extension radiale des tourbillons principaux prend de plus en plus d'ampleur au détriment de celle des tourbillons secondaires localisés dans les cavités secondaires. Le cas limite de ce régime de fonctionnement étant atteint lorsque les tourbillons principaux , pendant la période où ils sont forts, remplissent totalement les cavités secondaires.
Or, pendant la phase où ils sonts forts, plus les tourbillons principaux participant au phénomène d'oscillation du jet possèdent une extension radiale importante, plus la fréquence d'oscillation du jet diminue. On obtient par conséquent une diminution du facteur K et de sa variation relative et donc d'une manière générale, un accroissement du régime de fonctionnement linéaire de l'oscillateur.
De manière avantageuse, la cavité principale possède des parois inclinées formant sensiblement un V dont les deux branches vont en s'évasant vers l'extérieur de la cavité.
Les parois de la cavité principale peuvent présenter un angle d'ouverture par rapport au plan de symétrie compris dans une gamme allant de 0° à 80°.
De manière avantageuse, la cavité présente un fond sensiblement parabolique. Lorsque l'angle d'ouverture est de 0°, la cavité principale est rectangulaire, mais préférentiellement, les parois de la cavité principale présentent un angle d'ouverture par rapport au plan de symétrie compris dans une gamme allant de 10° à 45°. La distance séparant le fond de la cavité principale de l'ouverture d'entrée peut être comprise dans une gamme allant de 3 d à 15 d, d étant la largeur de l'ouverture d'entrée.
La fréquence mesurée lors de l'oscillation du jet fluide va dépendre de cette distance du fond de la cavité à l'ouverture d'entrée. Avantageusement, pour mesurer une fréquence suffisamment élevée, cette distance est comprise dans une gamme allant de 4 d à 8 d.
De manière avantageuse, la cavité principale possède une entrée de largeur comprise dans la gamme allant de 2d à 10d.
Selon un mode particulier de réalisation, la partie frontale de l'obstacle présente une largeur comprise dans une gamme allant de 5 d à 30 d, où d est la largeur de l'ouverture d'entrée.
La partie frontale de l'obstacle est sensiblement perpendiculaire au plan de symétrie. Elle peut être disposée à une distance de l'ouverture d'entrée comprise dans une gamme allant de 1 d à 10 d, d étant la largeur de l'ouverture d'entrée.
Selon un mode de réalisation particulier d'un oscillateur fluidique avec un obstacle doté de cavités secondaires, ces dernières présentent sensiblement une forme contenue dans un quadrilatère avec un côté ouvert formant l'entrée de la cavité secondaire, cette forme étant tangente à trois côtés du quadrilatère.
Dans un autre mode de réalisation, chaque cavité secondaire présente sensiblement une forme contenue dans un triangle avec un côté ouvert formant l'entrée de la cavité secondaire, cette forme étant tangente à deux côtés du triangle.
Selon une réalisation particulière, chaque cavité secondaire possède un fond en gradins.
Selon une réalisation particulière, chaque cavité secondaire possède une entrée de largeur comprise dans une gamme allant de 1 d à 10 d, d étant la largeur de l'ouverture d'entrée.
Avantageusement, l'entrée de fluide comprend une chambre de tranquillisation hexaédrique apte à être raccordée à une conduite d'entrée, un convergent raccordé à une face de la chambre de tranquillisation comprenant une ouverture d'entrée rectangulaire de largeur d apte à être raccordée à la chambre d'oscillation.
Préferentiellement, l'entrée de fluide comprend en outre des moyens de conditionnement de jet de fluide.

Selon une variante, ces moyens de conditionnement sont constitués par une plaque disposée selon le plan de symétrie. Selon une autre variante, ces moyens de conditionnement sont constitués par un obstacle profilé disposé selon le plan de symétrie.
Avantageusement, les moyens de conditionnement présentent une extrémité éloignée de l'ouverture d'entrée d'une distance comprise dans une gamme allant de 0,5 d à 4 d, où d est la largeur de l'ouverture d'entrée.

La présente invention concerne aussi un débitmètre comprenant un tel oscillateur fluidique.
Les caractéristiques de l'invention ressortiront mieux à la lecture de la description qui suit, donnée à titre illustratif et non limitatif se référant aux dessins annexés sur lesquels:
La figure 1 déjà décrite représente schématiquement la variation relative du facteur K en fonction du débit pour un oscillateur fluidique de l'art antérieur;
La figure 2 représente schématiquement un oscillateur fluidique conforme à l'invention, vu de dessus;
La figure 3 représente schématiquement une vue en perspective de l'entrée d'un oscillateur fluidique conforme à l'invention;
La figure 4 représente schématiquement une vue en perspective d'une variante de réalisation de l'entrée d'un oscillateur fluidique conforme à l'invention;
La figure 5 représente schématiquement un profil de vitesse du jet fluide avec et sans obstacle;
La figure 6 représente schématiquement une vue partielle, de dessus, d'un obstacle placé dans un oscillateur fluidique conforme à l'invention;
La figure 7 représente schématiquement une vue partielle de dessus d'une variante de réalisation d'un tel obstacle;
La figure 8 représente schématiquement une vue partielle de dessus d'une autre variante de réalisation d'un tel obstacle;
La figure 9 représente schématiquement une vue partielle de dessus d'une autre variante de réalisation d'un tel obstacle;
La figure 10 représente schématiquement une vue partielle de dessus d'une autre variante de réalisation d'un tel obstacle;
La figure 11 représente schématiquement une vue partielle de dessus d'un oscillateur fluidique conforme à l'invention en fonctionnement en régime de transition;
La figure 12 représente schématiquement l'oscillateur fluidique de la figure 11 mais à un instant différent;
La figure 13 représente schématiquement la variation relative du facteur K en fonction du débit pour un oscillateur conforme à l'invention;

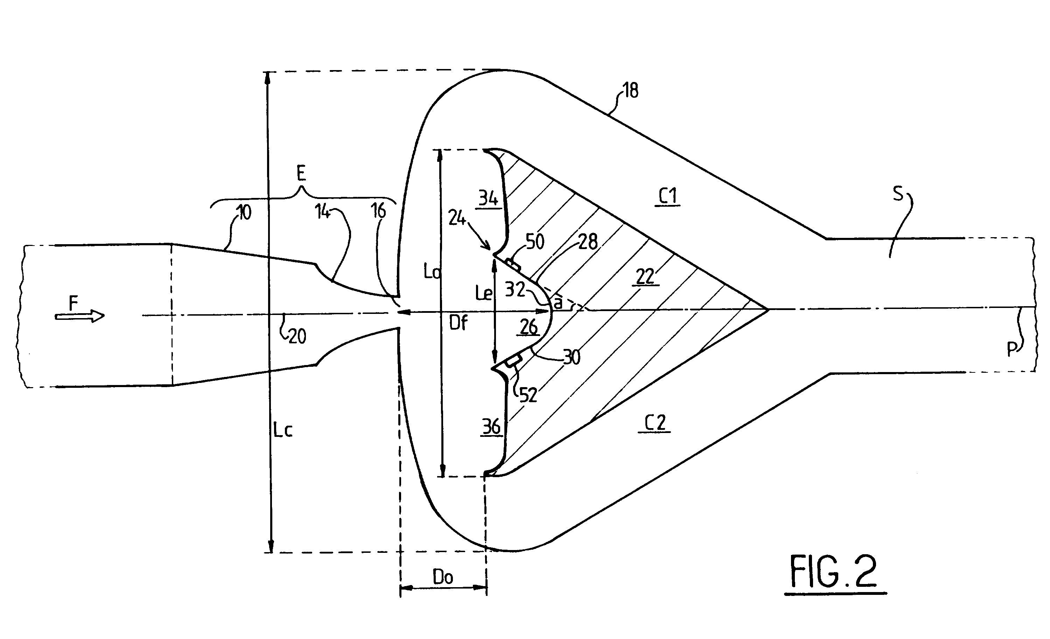

La figure 2 représente une vue de dessus d'un oscillateur fluidique conforme à l'invention. Le fluide peut-être un liquide ou un gaz. L'oscillateur possède un plan de symétrie longitudinal P.

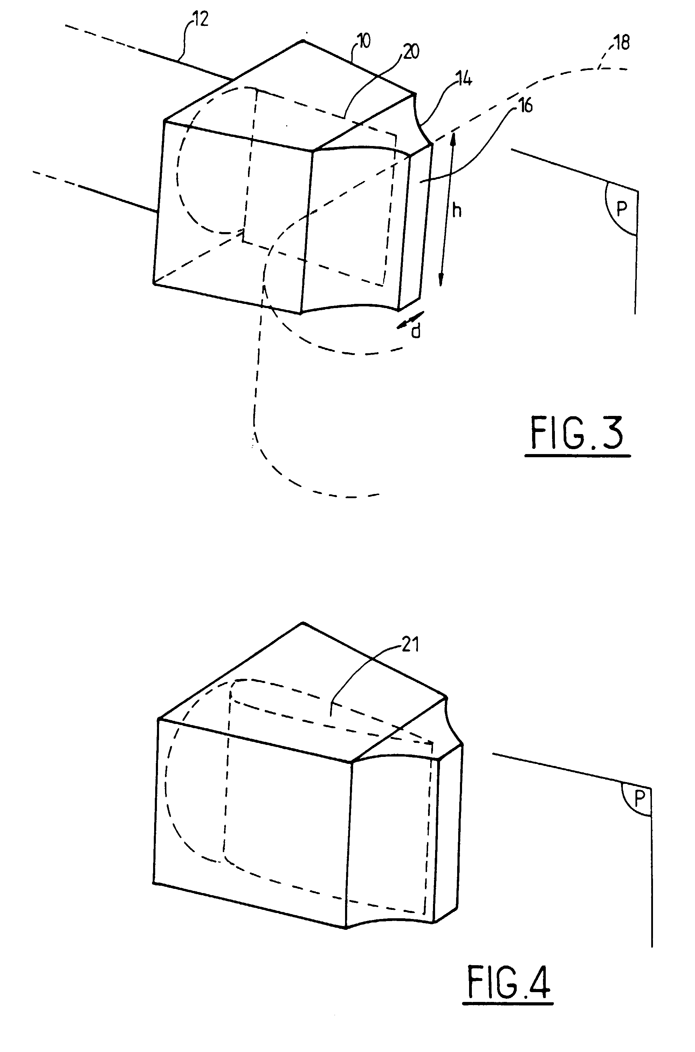

Le fluide pénètre dans l'oscillateur par une entrée E composée comme on peut le voir sur la figure 3, d'une chambre de tranquillisation 10 raccordée à la canalisation d'arrivée de fluide 12 et d'un convergent 14 terminé par une ouverture d'entrée rectangulaire 16.
La chambre de tranquillisation 10 présente une forme hexaédrique, la surface de sa face avant (raccordée à la canalisation d'arrivée) étant supérieure à la surface de sa face arrière (raccordée au convergent). Sa face arrière est préférentiellement cubique de côté égal à la hauteur du jet bidimensionnel. Elle permet la transformation du jet de fluide cylindrique sortant de la canalisation d'arrivée 12 en un jet de section sensiblement rectangulaire.
Le convergent 14, outre l'accélération du fluide, permet la formation du jet bidimensionnel oscillant. Pour cela,
l'ouverture d'entrée 16 dans la chambre d'oscillation 8 possède une forme rectangulaire de longeur h et largeur d dont le rapport respecte les conditions de bidimentionnalité bien connues de l'Homme de l'art.
D'une manière générale, le rapport h/d doit être de l'ordre ou supérieur à 6. La largeur d est prise comme unité de référence dans la suite de la description.

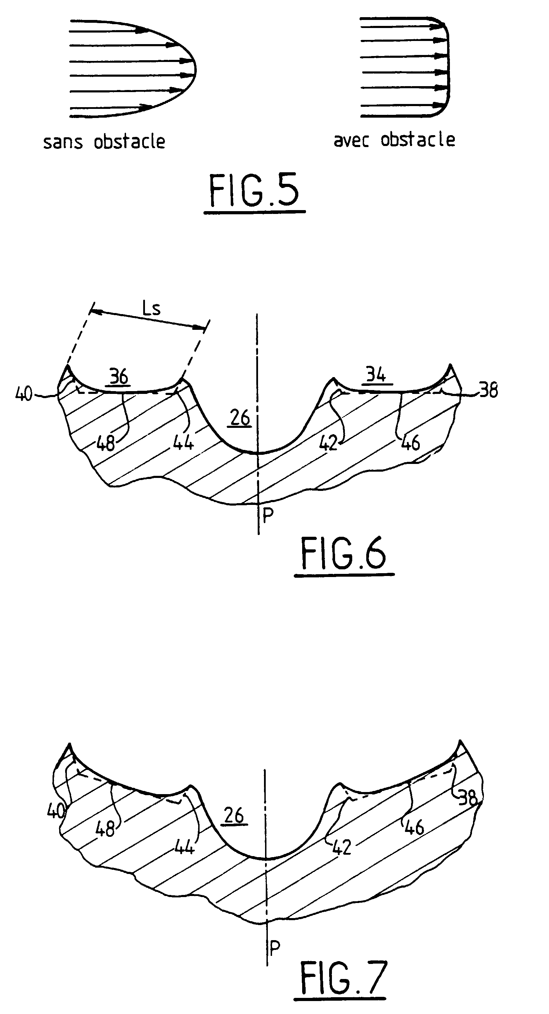

L'entrée E compte en outre des moyens de conditionnement du fluide. Ces moyens peuvent être constitués par une plaque 20 disposée selon le plan de symétrie P.
La figure 4 représente schématiquement une variante de réalisation de ces moyens de conditionnement. Dans cette variante, ces moyens sont constitués par un obstacle profilé 21 disposé selon le plan de symétrie P.
Comme on peut le voir sur la figure 5, le conditionnement consiste à rendre sensiblement plat le profil de vitesse du jet qui est naturellement parabolique aux faibles débits, sachant qu'aux forts débits ce profil reste plat. Ainsi les profils de vitesses restent similaires pour tous les débits.

L'extrémité de la plaque 20 ou de l'obstacle 21 en regard de l'ouverture d'entrée 16 est éloignée de ladite ouverture d'entrée d'une distance comprise dans une gamme allant de 0,5 d à 4 d pour obtenir l'effet recherché dans des conditions les plus favorables.
Par exemple, cette distance peut-être égale à 1 d.
De retour à la figure 2, on voit que le jet bidimentionnel oscillant pénètre dans une chambre d'oscillation 18 comprenant un obstacle 22. La chambre et l'obstacle sont symétriques par rapport au plan de symétrie longitudinal P. L'obstacle 22 comprend une partie frontale 24 sensiblement perpendiculaire au plan de symétrie longitudinal P et disposée à une distance Do de l'ouverture d'entrée 16 comprise dans une gamme allant 1 d à 10 d.
Par exemple, cette distance peut-être égale à 3 d.
La partie frontale 24 de l'obstacle 22 possède une largeur Lo comprise dans une gamme allant de 5 d à 30 d.
Par exemple, cette largeur peut-être égale à 12 d.
La chambre d'oscillation 18 possède une plus grande largeur Lc au niveau de laquelle est placée la partie frontale de l'obstacle; Lc peut-être comprise dans une gamme allant de 10 d à 50 d. Par exemple, Lc peut-être égale à 20 d. Les espaces situés entre l'obstacle et les parois de la chambre forment des canaux C1, C2 d'écoulement de fluide qui dirigent celui-ci vers une ouverture de sortie. La largeur de ces canaux est sensiblement égale à Lc-Lo. Une cavité principale 26 est pratiquée dans l'obstacle 22 en regard de l'ouverture d'entrée 16. Cette cavité principale 26 présente une entrée de largeur Le comprise dans une gamme allant de 2 d à 20 d. Par exemple, Le peut-être égale à 5 d.
Dans le mode de réalisation représenté sur la figure 2, la cavité principale possède des parois inclinées 28, 30 formant sensiblement un V dont les branches vont en s'évasant vers l'extérieur de la cavité 26.
Ces parois 28, 30 présentent un angle d'ouverture a1 par rapport au plan de symétrie P compris dans une gamme allant de 0° à 80°. Avantageusement, a1 est compris dans une gamme allant de 10° à 45°. Il peut-être par exemple égal à 45°.
Dans l'exemple de réalisation représenté sur la figure 2, les parois latérales 28, 30 de la cavité principale 26 se referment sur un fond 32 sensiblement parabolique. Le fond de la cavité principale est disposé en regard de l'ouverture d'entrée 16 à une distance Df de celle ci, Df étant comprise dans une gamme allant de 3 d à 15 d.
Df peut par exemple être égale à 6 d.
L'oscillation du jet bidimensionnel dans la chambre d'oscillation 18 s'accompagne de la formation de tourbillons situés de part et d'autre du jet, alternativement forts et faibles en opposition de phase et en relation avec l'oscillation. Ces tourbillons sont localisés principalement dans l'espace situé entre la partie frontale 24 de l'obstacle 22 et la paroi de la chambre 18 dans laquelle est raccordée l'ouverture d'entrée 16. Le jet ayant pénétré la chambre d'oscillation 18 vient frapper les parois et le fond de la cavité principale 26 dans un mouvement de balayage alternatif.

Conformément à l'invention, l'oscillateur fluidique comprend des moyens aptes à rendre l'extension radiale des tourbillons dépendante du régime d'écoulement du jet.
Les tourbillons ne présentent pas une section transverse circulaire; par ailleurs, ils se déforment au cours de l'oscillation du jet. Par conséquent, par extension radiale on entend la distance entre le centre du tourbillon considéré et son périmètre.
Dans l'exemple de réalisation de la figure 2, les moyens aptes à rendre l'extension radiale des tourbillons dépendante du régime d'écoulement du jet sont constitués par deux cavités secondaires 34, 36 pratiquées dans la partie frontale 24 de l'obstacle 22, symétriquement par rapport au plan de symétrie P, de part et d'autre de la cavité principale 26.
Sur la figure 6, les cavités secondaires 34 et 36 présentent une forme contenue dans un quadrilatère dont un côté est ouvert pour former une entrée. La forme des cavités secondaires est donc tangente à trois côtés du quadrilatère. Chaque cavité secondaire dans sa forme limite en quadrilatère possède une première paroi latérale extérieure 38, 40, une seconde paroi latérale intérieure 42, 44, et un fond 46, 48.
Les inclinaisons des parois latérales par rapport à un plan parallèle au plan de symétrie P peuvent prendre des valeurs angulaires importantes sans que le fonctionnement du dispositif en soit profondément modifié. Sur la figure 6, le fond des cavités secondaires est perpendiculaire au plan de symétrie P, mais il peut, comme on le voit sur la figure 7, présenter un angle d'ouverture avec ce plan, cet angle pouvant prendre des valeurs allant jusqu'à + 45°.
L'entrée de chaque cavité secondaire présente une largeur Ls comprise dans une gamme allant de 1 d à 15 d.
La forme des cavités secondaires peut aller du quadrilatère lui même (avec un côté ouvert formant entrée) à une forme courbe ne présentant qu'un point de contact avec chacun des côtés du quadrilatère.

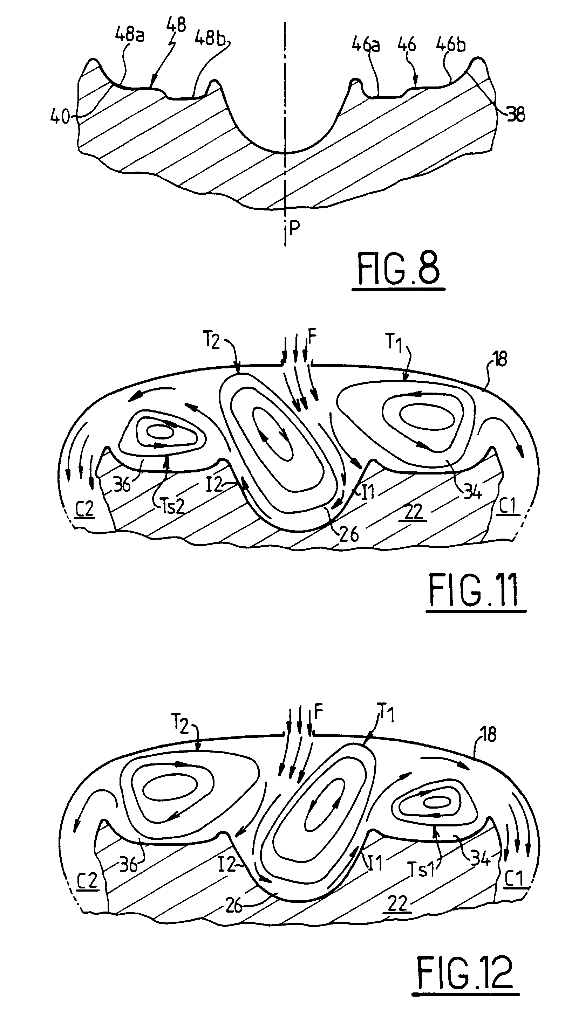

Dans une variante de réalisation représentée schématiquement sur la figure 8, on voit que le fond 46, 48 de la cavité peut-être en gradins; dans cet exemple, les fonds 46 et 48 présentent respectivement deux marches 46a, 46b et 48a, 48b, mais peuvent éventuellement en posséder plus.
Ces marches peuvent être perpendiculaires au plan de symétrie P ou bien présenter avec lui un angle d'ouverture différent de 90°.
La contremarche séparant les marches peut-être parallèle au plan de symétrie P ou bien présenter un angle d'ouverture différent de 0°. En particulier la contremarche peut-être parallèle à la paroi latérale extérieure 38, 40.

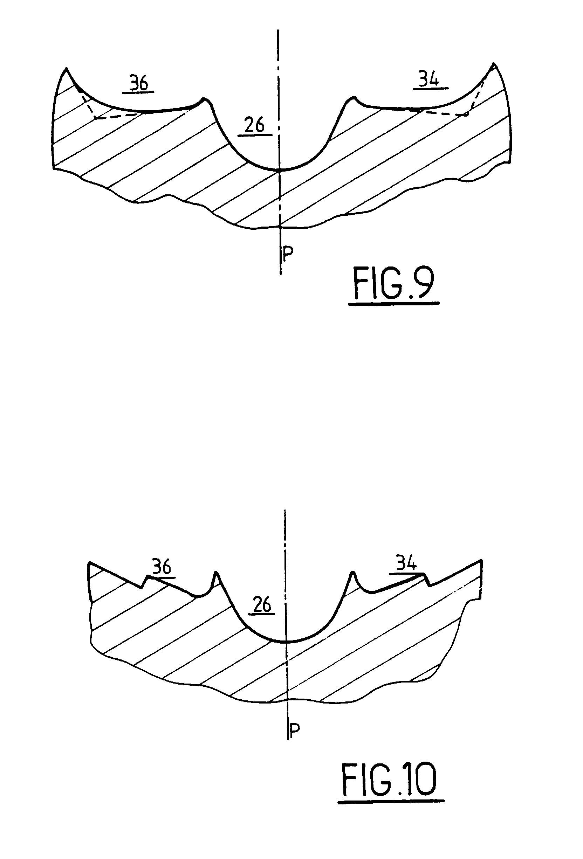

Sur la figure 9, les cavités secondaires 34 et 36 présentent une forme contenue dans un triangle dont un côté est ouvert pour former une entrée. La forme des cavités secondaires est donc tangente à deux des côtés du triangle. Ici encore, la forme des cavités secondaires peut aller du triangle lui même (avec un côté ouvert formant entrée) à une forme courbe ne présentant qu'un point de contact avec chacun des côtés du triangle.
Sur la figure 10, le fond des cavités secondaires est en gradins. On comprend qu'outre les formes décrites ci-dessus, les cavités secondaires peuvent adopter des géométries équivalentes, avec des formes limites différentes tout en remplissant la même fonction.
En régime turbulent, quelle que soit la position de l'impact du jet fluide dans la cavité principale 26, un tourbillon secondaire se forme dans chaque cavité secondaire 34, 36. Ces tourbillons secondaires sont suffisamment intenses pour que l'oscillateur fluidique fonctionne globalement de la même manière qu'un oscillateur sans cavité secondaire.
La description suivante concerne le fonctionnement général du dispositif en régime de transition; elle est donnée en référence aux figures 11 et 12.

L'impact du jet fluide F balaye la cavité principale 26 entre les points extrêmes I1 et I2. L'oscillation s'accompagne de la formation des tourbillons principaux T1 et T2 localisés entre la partie frontale de l'obstacle 22 et la paroi de la chambre d'oscillation 18 raccordée à l'ouverture d'entrée.
Sur la figure 11, l'impact du jet atteint le point I1, le tourbillon T1 est alors concentré et fort tandis que le tourbillon T2 est faible. Le jet fluide s'échappe principalement par le canal C2.
En régime turbulent, les deux cavités secondaires 34, 36 sont remplies par des tourbillons secondaires Ts1 et Ts2 alternativement forts et faibles en opposition de phase avec les tourbillons principaux. Mais plus le débit diminue, plus l'intensité ou la concentration de ces tourbillons secondaires diminue.
Il en résulte que le tourbillon principal fort, en l'occurence T1 sur la figure 11, voit son extension radiale augmenter, de sorte que lorsqu'on diminue le débit, il occupe progressivement la cavité secondaire 34 au détriment du tourbillon secondaire Ts1 qui finit par disparaître totalement. Par contre, le tourbillon secondaire Ts2 créé par l'échappement du jet fluide est toujours présent dans la cavité secondaire 36.
Sur la figure 12, l'impact du jet fluide est situé en I2; c'est alors le tourbillon T2 qui présente une extension radiale augmentée, le tourbillon secondaire Ts2 disparaissant totalement lorsque le débit est suffisamment abaissé. Les tourbillons principaux lorsqu'ils sont concentrés et forts possèdent une extension radiale supérieure en régime de transition à celle qu'ils possèdent en régime turbulent (puisque dans ce dernier régime les cavités secondaires sont toutes les deux occupées par des tourbillons secondaires, l'espace disponible au développement des tourbillons principaux est réduit). La fréquence d'oscillation est d'autant plus faible que l'extension radiale des tourbillons principaux forts est grande.
On constate sur la figure 13 qui représente schématiquement les variations relatives du facteur K en fonction du nombre de Reynolds pour un dispositif conforme à l'invention que le fait de rendre l'extension radiale des tourbillons dépendantes du régime de débit permet d'augmenter la fréquence d'oscillation en régime turbulent et de diminuer la fréquence d'oscillation en régime de transition et donc d'améliorer la linéarité de l'oscillateur.
L'oscillateur fluidique de la figure 2 permet la mesure du débit du fluide qui le traverse grâce aux deux prises de pression 50 et 52 situées aux points extrêmes de balayage du jet fluide à l'intérieur de la cavité principale 26. Ces prises de pression sont reliées à des dispositifs connus qui permettent de mesurer la fréquence d'oscillation du jet. Grâce à un étalonnage préalable, cette fréquence est reliée au débit; On obtient donc un débitmètre linéaire sur une plage de mesure étendue.

## Revendications

1. Oscillateur fluidique symétrique par rapport à un plan de symétrie longitudinal (P) et comprenant :
- une entrée de fluide (E) comprenant une ouverture (16) d'entrée possédant une largeur d et apte à former un jet de fluide bidimensionnel oscillant transversalement par rapport au plan de symétrie longitudinal et des tourbillons (T1, T2) de part et d'autre du jet, ces tourbillons étant alternativement forts et faibles en opposition de phase et en relation avec l'oscillation du jet,
- une chambre d'oscillation (18) raccordée à l'ouverture (16) d'entrée de fluide,
- un obstacle (22) disposé dans la chambre d'oscillation (18) et possédant une partie frontale (24) dans laquelle une cavité principale (26) est pratiquée en regard de l'ouverture (16) d'entrée de fluide, la partie frontale de l'obstacle et la paroi de la chambre d'oscillation raccordée à l'ouverture d'entrée définissant entre elles deux espaces libres de tout obstacle, situés de part et d'autre de la cavité principale, l'oscillateur fluidique étant caractérisé en ce qu'il comprend en outre des moyens (34, 36) aptes à rendre l'extension radiale de ces tourbillons dépendante du régime d'écoulement du jet, lesdits moyens comprenant au moins deux cavités secondaires (34, 36) pratiquées dans la partie frontale (24) de l'obstacle (22), ces cavités secondaires étant disposées symétriquement par rapport au plan de symétrie (P) de part et d'autre de la cavité principale (26).

2. Oscillateur fluidique selon la revendication 1, caractérisé en ce que la cavité principale (26) possède des parois (28, 30) inclinées formant sensiblement un V dont les deux branches vont en s'évasant vers l'exterieur de la cavité.

3. Oscillateur fluidique selon la revendication 2, caractérisé en ce que les parois (28, 30) de la cavité principale (26) présentent un angle d'ouverture (a1) par rapport au plan de symétrie (P) compris dans une gamme allant de 0° à 80°.

4. Oscillateur fluidique selon la revendication 3, caractérisé en ce que les parois (28, 30) de la cavité principale (26) présentent un angle d'ouverture (a1) par rapport au plan de symétrie P compris dans une gamme allant de 10° à 45°.

5. Oscillateur fluidique selon la revendication 1, caractérisé en ce que le fond (32) de la cavité principale (26) en regard de l'ouverture (16) d'entrée est disposé à une distance (Df) de l'ouverture d'entrée comprise dans une gamme allant de 3d, à 15d, où d est la largueur de l'ouverture d'entrée.

6. Oscillateur fluidique selon la revendication 5, caractérisé en ce que le fond (32) de la cavité principale (26) en regard de l'ouverture (16) d'entrée est disposée à une distance (Df) de l'ouverture d'entrée comprise dans une gamme allant de 4d à 8d, où d est la largueur de l'ouverture d'entrée.

7. Oscillateur fluidique selon la revendication 1, caractérisé en ce que la cavité principale (26) possède une entrée de largeur (Le) comprise dans la gamme allant de 2d à 10d, où d est la largueur de l'ouverture d'entrée..

8. Oscillateur fluidique selon la revendication 1, caractérisé en ce que la partie frontale (24) de l'obstacle (22) présente une largeur (Lo) comprise dans une gamme allant de 5 d à 30 d, où d est la largueur de l'ouverture d'entrée.

9. Oscillateur fluidique selon la revendication 1, caractérisé en ce que la partie frontale (24) de l'obstacle (22) est sensiblement perpendiculaire au plan de symétrie (P) et disposée à une distance (Do) de l'ouverture (16) d'entrée comprise dans une gamme allant de 1 d à 10 d, d étant la largueur de l'ouverture d'entrée.

10. Oscillateur fluidique selon la revendication 1, caractérisé en ce que chaque cavité secondaire (34, 36) présente sensiblement une forme contenue dans un quadrilatère avec un côté ouvert formant l'entrée de la cavité secondaire, cette forme étant tangente à trois côtés du quadrilatère.

11. Oscillateur fluidique selon la revendication 1, caractérisé en ce que chaque cavité secondaire (34, 36) présente sensiblement une forme contenue dans un triangle avec un côté ouvert formant l'entrée de la cavité secondaire, cette forme étant tangente à deux côtés du triangle.

12. Oscillateur fluidique selon l'une des quelconque des revendications 10 ou 11 caractérisé en ce que chaque cavité secondaire (34, 36) possède un fond en gradins.

13. Oscillateur fluidique selon l'une des quelconque revendications 10 ou 11 caractérisé en ce que chaque cavité secondaire (34, 36) possède une entrée de largeur (Ls) comprise dans une gamme allant de 1 d à 10 d, où d est la largueur de l'ouverture d'entrée.

14. Oscillateur fluidique selon la revendication 1, caractérisé en ce que l'entrée (E) de fluide comprend une chambre de tranquillisation hexaédrique (10) apte à être raccordée à une conduite d'entrée (12), un convergent (14) raccordé à une face de la chambre de tranquillisation (10), ce convergent ayant une ouverture (16) d'entrée rectangulaire de largeur d apte à être raccordée à la chambre d'oscillation (18).

15. Oscillateur fluidique selon la revendication 14, caractérisé en ce que l'entrée (E) de fluide comprend en outre des moyens (20, 21) de conditionnement de jet de fluide.

16. Oscillateur fluidique selon la revendication 15, caractérisé en ce que les moyens de conditionnement sont constitués par une plaque (20) disposée selon le plan de symétrie (P).

17. Oscillateur fluidique selon la revendication 15, caractérisé en ce que les moyens de conditionnement sont constitués par un obstacle profilé (21) disposé selon le plan de symétrie.

18. Oscillateur fluidique selon la revendication 16 ou 17 caractérisé en ce que les moyens de conditionnement présentent une extrémité éloignée de l'ouverture d'entrée d'une distance comprise dans une gamme allant de 0,5 d à 4 d, où d est la largueur de l'ouverture d'entrée.

19. Débitmètre caractérisé en ce qu'il comprend un oscillateur fluidique conforme à l'une quelconque des revendications 1 à 18.

## Claims

1. A fluidic oscillator that is symmetrical about a longitudinal plane of symmetry (P), comprising:
- a fluid inlet (E) having an inlet opening (16) of width d suitable for forming a two-dimensional fluid jet oscillating transversely relative to said longitudinal plane of symmetry with vortices (T1, T2) on either side of the jet, these vortices being alternately strong and weak in phase opposition and in sympathy with the oscillation of the jet,
- an oscillation chamber (18) connected to the fluid inlet opening (16),
- an obstacle (22) located in the oscillation chamber (18) and having a front part (24) in which there is formed a main cavity (26) facing the fluid inlet opening (16), the front part of the obstacle and the wall of the oscillation chamber that is connected to the inlet opening defining therebetween two spaces free from any obstacle, disposed on either side of the main cavity, the fluidic oscillator being characterized in that it further comprises means (34, 36) adapted to render the radial extension of the vortices dependent on the flow conditions of the jet, these means comprising at least two secondary cavities (34, 36) formed in the front part (24) of the obstacle (22), these secondary cavities being diposed symmetrically relative to the plane of symmetry (P) on either side of the main cavity (26).

2. A fluidic oscillator according to claim 1, characterized in that the main cavity (26) has inclined walls (28, 30) making substantially a V whose two arms flare apart towards the outside of the cavity.

3. A fluidic oscillator according to claim 2, characterized in that the walls (28, 30) of the main cavity (26) have an entrance angle (a1) relative to the plane of symmetry (P) lying within a range from 0° to 80°.

4. A fluidic oscillator according to claim 3, characterized in that the walls (28, 30) of the main cavity (26) have an entrance angle (a1) relative to the plane of symmetry (P) lying within a range from 10° to 45°.

5. A fluidic oscillator according to claim 1, characterized in that the bottom (32) of the main cavity (26) is located opposite the inlet opening (16) at a distance (Df) from the inlet opening lying within a range from 3d to 15d, where d is the width of the inlet opening.

6. A fluidic oscillator according to claim 5, characterized in that the bottom (32) of the main cavity (26) is located opposite the inlet opening (16) at a distance (Df) from the inlet opening lying within a range from 4d to 8d, where d is the width of the inlet opening.

7. A fluidic oscillator according to claim 1, characterized in that the main cavity (26) has an inlet of width (Le) lying within a range from 2d to 10d, where d is the width of the inlet opening.

8. A fluidic oscillator according to claim 1, characterized in that the front part (24) of the obstacle (22) has a width (Lo) lying within a range from 5d to 30d, where d is the width of the inlet opening.

9. A fluidic oscillator according to claim 1, characterized in that the front part (24) of the obstacle (22) is substantially perpendicular to the plane of symmetry (P) and is located at a distance (Do) from the inlet opening (16) lying within a range from 1d to 10d, d being the width of the inlet opening.

10. A fluidic oscillator according to claim 1, characterized in that each secondary cavity (34, 36) has substantially a shape contained within a quadrilateral with an open face forming the inlet to the secondary cavity, this shape being tangential to three sides of the quadrilateral.

11. A fluidic oscillator according to claim 1, characterized in that each secondary cavity (34, 36) has substantially a shape contained within a triangle with an open side forming the inlet to the secondary cavity, this shape being tangential to two sides of the triangle.

12. A fluidic oscillator according to any one of the claims 10 or 11, characterized in that each secondary cavity (34, 36) has a stepped bottom.

13. A fluidic oscillator according to any one of the claims 10 or 11, characterized in that each secondary cavity (34, 36) has an inlet of width (Ls) lying within a range from 1d to 10d, where d is the width of the inlet opening.

14. A fluidic oscillator according to claim 1, characterized in that the fluid inlet (E) comprises a hexahedral settling chamber (10) adapted to be connected to an inlet duct (12), and a convergent section (14) connected to one side of the settling chamber (10), this convergent section having a rectangular inlet opening (16) of width d adapted to be connected to the oscillation chamber (18).

15. A fluidic oscillator according to claim 14, characterized in that the fluid inlet (E) further comprises means (20, 21) for conditioning the fluid jet.

16. A fluidic oscillator according to claim 15, characterized in that the conditioning means are formed by a plate (20) located along the plane of symmetry (P).

17. A fluidic oscillator according to claim 15, characterized in that the conditioning means are formed by a profiled obstacle (21) located along the plane of symmetry (P).

18. A fluidic oscillator according to claim 16 or 17, characterized in that the conditioning means have an end spaced from the inlet opening by a distance lying within a range from 0.5d to 4d, where d is the width of the inlet opening.

19. A flowmeter characterized in that it comprises a fluidic oscillator in accordance with any one of claims 1 to 18.

## Patentansprüche

1. Fluidischer Oszillator, der in bezug auf eine Längssymmetrieebene (P) symmetrisch ist und enthält:
- einen Fluideingang (E) mit einer Eintrittsöffnung (16), die eine Breite d hat und geeignet ist, einen quer zur Längssymmetrieebene schwingenden zweidimensionalen Fluidstrahl und Wirbel (T1, T2) zu beiden Seiten des Strahls zu erzeugen, wobei diese Wirbel gegenphasig und in Beziehung zu der Schwingung des Strahls abwechselnd stark und schwach sind,
- eine an die Fluideintrittsöffnung (16) angeschlossene Schwingungskammer (18),
- ein Hindernis (22), das in der Schwingungskammer (18) angeordnet ist und einen Stirnabschnitt (24) hat, in dem ein Haupthohlraum (26) gegenüber der Fluideintrittsöffnung (16) ausgebildet ist, wobei der Stirnabschnitt des Hindernisses und die sich an die Eintrittsöffnung anschließende Wand der Schwingungskammer miteinander zwei völlig hindernisfreie Räume definieren, die zu beiden Seiten des Haupthohlraums liegen, wobei der fluidische Oszillator dadurch gekennzeichnet ist, daß er außerdem Mittel (34, 36) enthält, die geeignet sind, die radiale Ausdehnung dieser Wirbel von dem Abströmverhalten des Strahls abhängig zu machen, wobei diese Mittel wenigstens zwei Nebenhohlräume (34, 36) aufweisen, die in dem Stirnabschnitt (24) des Hindernisses (22) ausgebildet sind, wobei diese Nebenhohlräume symmetrisch in bezug auf die Symmetrieebene (P) zu beiden Seiten des Haupthohlraums (26) angeordnet sind.

2. Fluidischer Oszillator nach Anspruch 1, dadurch gekennzeichnet, daß der Haupthohlraum (26) schräge Wände (28, 30) besitzt, die im wesentlichen ein V bilden, dessen beide Schenkel sich zur Außenseite des Hohlraums hin erweitern.

3. Fluidischer Oszillator nach Anspruch 2, dadurch gekennzeichnet, daß die Wände (28, 30) des Haupthohlraums in bezug auf die Symmetrieebene (P) einen Öffnungswinkel (a1) aufweisen, der in einem Bereich enthalten ist, der von 0° bis 80° geht.

4. Fluidischer Oszillator nach Anspruch 3, dadurch gekennzeichnet, daß die Wände (28, 30) des Haupthohlraums (26) in bezug auf die Symmetrieebene (P) einen Öffnungswinkel (a1) aufweisen, der in einem Bereich enthalten ist, der von 10° bis 45° geht.

5. Fluidischer Oszillator nach Anspruch 1, dadurch gekennzeichnet, daß der der Eintrittsöffnung (16) gegenüberliegende Boden (32) des Haupthohlraums (26) in einem Abstand (Df) von der Eintrittsöffnung liegt, der in einem Bereich enthalten ist, der von 3 d bis 15 d geht, wobei d die Breite der Eintrittsöffnung ist.

6. Fluidischer Oszillator nach Anspruch 5, dadurch gekennzeichnet, daß der der Eintrittsöffnung (16) gegenüberliegende Boden (32) des Haupthohlraums (26) in einem Abstand (Df) von der Eintrittsöffnung liegt, der in einem Bereich enthalten ist, der von 4 d bis 8 d geht, wobei d die Breite der Eintrittsöffnung ist.

7. Fluidischer Oszillator nach Anspruch 1, dadurch gekennzeichnet, daß der Haupthohlraum (26) einen Eingang der Breite (Le) hat, die in dem Bereich enthalten ist, der von 2 d bis 10 d geht, wobei d die Breite der Eintrittsöffnung ist.

8. Fluidischer Oszillator nach Anspruch 1, dadurch gekennzeichnet, daß der Stirnabschnitt (24) des Haupthohlraums (22) eine Breite (Lo) hat, die in einem Bereich enthalten ist, der von 5 d bis 30 d geht, wobei d die Breite der Eintrittsöffnung ist.

9. Fluidischer Oszillator nach Anspruch 1, dadurch gekennzeichnet, daß der Stirnabschnitt (24) des Hindernisses (22) im wesentlichen senkrecht zur Symmetrieebene (P) ist und in einem Abstand (Do) von der Eintrittsöffnung (16) liegt, der in einem Bereich enthalten ist, der von 1 d bis 10 d geht, wobei d die Breite der Eintrittsöffnung ist.

10. Fluidischer Oszillator nach Anspruch 1, dadurch gekennzeichnet, daß jeder Nebenhohlraum (34, 36) im wesentlichen eine Form hat, die in einem Viereck mit einer den Eingang des Nebenhohlraums bildenden offenen Seite enthalten ist, wobei diese Form drei Seiten des Vierecks tangiert.

11. Fluidischer Oszillator nach Anspruch 1, dadurch gekennzeichnet, daß jeder Nebenhohlraum (34, 36) im wesentlichen eine Form hat, die in einem Dreieck mit einer den Eingang des Nebenhohlraums bildenden offenen Seite enthalten ist, wobei diese Form zwei Seiten des Dreiecks tangiert.

12. Fluidischer Oszillator nach einem der Ansprüche 10 oder 11, dadurch gekennzeichnet, daß jeder Nebenhohlraum (34, 36) einen abgestuften Boden hat.

13. Fluidischer Oszillator nach einem der Ansprüche 10 oder 11, dadurch gekennzeichnet, daß jeder Nebenhohlraum (34, 36) einen Eingang der Breite (Ls) besitzt, die in einem Bereich enthalten ist, der von 1 d bis 10 d geht, wobei d die Breite der Eintrittsöffnung ist.

14. Fluidischer Oszillator nach Anspruch 1, dadurch gekennzeichnet, daß der Fluideingang (E) eine hexaedrische Beruhigungskammer (10) hat, die an eine Eingangsleitung (12) anschließbar ist, und einen konvergierenden Abschnitt (14), der sich an eine Seite der Beruhigungskammer (10) anschließt, wobei dieser konvergierende Abschnitt eine rechteckige Eintrittsöffnung (16) der Breite d hat, die an die Schwingungskammer (18) anschließbar ist.

15. Fluidischer Oszillator nach Anspruch 14, dadurch gekennzeichnet, daß der Fluideingang (E) außerdem Mittel (20, 21) zur Konditionierung des Fluidstrahls aufweist.

16. Fluidischer Oszillator nach Anspruch 15, dadurch gekennzeichnet, daß die Konditionierungsmittel durch eine in der Symmetrieebene (P) angeordnete Platte (20) gebildet sind.

17. Fluidischer Oszillator nach Anspruch 15, dadurch gekennzeichnet, daß die Konditionierungsmittel durch ein in der Symmetrieebene angeordnetes Profilhindernis (21) gebildet sind.

18. Fluidischer Oszillator nach Anspruch 16 oder 17, dadurch gekennzeichnet, daß die Konditionierungsmittel ein Ende haben, das von der Eintrittsöffnung um einen Abstand entfernt ist, der in einem Bereich enthalten ist, der von 0,5 d bis 4 d geht, wobei d die Breite der Eintrittsöffnung ist.

19. Durchflußmesser, dadurch gekennzeichnet, daß er einen fluidischen Oszillator gemäß einem der Ansprüche 1 bis 18 enthält.
